# EUROPÄISCHE PATENTSCHRIFT

(11) **EP 2 491 176 B1**
(45) Veröffentlichungstag und Bekanntmachung des Hinweises auf die Patenterteilung: **25.09.2013**
(21) Anmeldenummer: 10734109.1
(22) Anmeldetag: 15.07.2010
(51) Int. Cl.: D21B 1/32, D21F 1/70

(54) **VERFAHREN ZUR ENTFERNUNG VON FESTSTOFFEN AUS EINER FASERSTOFFSUSPENSION DURCH FLOTATION**
METHOD FOR REMOVING SOLID PARTICLES FROM A FIBROUS SUSPENSION BY FLOTATION
PROCEDE POUR ELIMINER DES PARTICULES SOLIDES D'UNE SUSPENSION FIBREUSE PAR FLOTTATION

(30) Priorität: 23.10.2009 DE 102009045965
(43) Veröffentlichungstag der Anmeldung: 29.08.2012
(73) Patentinhaber: Voith Patent GmbH, 89522 Heidenheim (DE)
(72) Erfinder: BRITZ, Herbert, 88276 Berg (DE); DELMAS, Delphine, F-12850 Onet le Chateau (FR)
(86) Internationale Anmeldenummer: PCT/EP2010/060191
(87) Internationale Veröffentlichungsnummer: WO 2011/047892

(56) Entgegenhaltungen:
- EP-A1- 1 262 593
- EP-A2- 1 416 086
- DE-A1- 10 329 883
- DE-A1-102007 060 736
- DE-C1- 10 125 978
- DE-C1- 19 823 053

## Beschreibung

Die Erfindung betrifft ein Verfahren zur Entfernung von Feststoffen gemäß dem Oberbegriff des Anspruchs 1.

Durch Flotation wird ein Schaum oder Schwimmschlamm gebildet, der die auszuscheidenden Stoffe enthält und abführt. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen. Dabei wird in der Faserstoffsuspension oft eine Faserstoffdichte (Fasermenge bezogen auf die Gesamtmenge) eingestellt, die zwischen 0,5 % und 2 % liegt, vorzugsweise zwischen 0,8 % und 1,2 %. Der hier beschriebene Flotationsvorgang nutzt die Unterschiede zwischen Papierfaserstoff und auszuscheidenden Feststoffen, insbesondere von unerwünschten Störstoffteilchen in der Art, dass der Faserstoff auf Grund seines eher hydrophilen Charakters in der Fasersuspension verbleibt, während die angesprochenen Störstoffteilchen hydrophob sind und deshalb zusammen mit den Luftblasen in den Schaum gelangen. Dabei werden also nicht alle Feststoffe ausflotiert, sondern Fasern von Verunreinigungen getrennt. Der oft benutzte Begriff "Flotationsdeinking" wird in der Regel nicht nur für die Entfernung von Druckfarbenpartikeln (ink = Druckfarbe), sondern auch allgemeiner für die Flotation von feinen Stoffen aus Faserstoffsuspensionen verwendet. Solche Stoffe sind neben den erwähnten Druckfarben weitere Verunreinigungen, insbesondere Kleber, feine Kunststoffpartikel und eventuell auch Harze. Auch das kontrollierte Ausflotieren von mineralischen Füllstoffen ("Asche") kann eines der Verfahrensziele sein.

Der Stand der Technik bezüglich Flotationsverfahren für Faserstoffsuspensionen ist bereits sehr weit fortgeschritten. Daher gibt es Lösungen, welche durchaus geeignet sind, Feststoffpartikel in der gewünschte Art und Menge durch Flotation zu entfernen. Allerdings werden gute Flotationsergebnisse mit einem relativ hohen Aufwand erkauft, insbesondere was Apparaturen, Betriebsmittel und Energie betrifft. Das Problem ist die Erfüllung zweier Anforderungen, nämlich einerseits die vollständige Entfernung aller auszuscheidenden Stoffe, in der Regel also der Störstoffe und andererseits die Vermeidung von Verlusten, also der ungewollten Ausscheidung von Stoffen, die für das später herzustellende Produkt herangezogen werden sollen. In der Flotations-Praxis lassen sich diese beiden Ziele nur mit komplexen Verfahren gleich gut erreichen.

Um beim Flotieren sowohl eine optimale Abtrennung flotierbarer Stoffe als auch einen sehr geringen Verlust zu erzielen, kann mit mehrstufigen Anlagen gearbeitet werden. Dabei durchströmt die Faserstoffsuspension zumeist mehrere zu einer Flotationsstufe gehörende Flotationskammern oder Flotationszellen nacheinander bis im Durchlauf, also dem Gutstoff die geforderte Stoffentfernung erreicht ist. Da der Überlauf, also der Flotationsschaum, der in dieser Flotationsstufe gebildet wird, noch einen beträchtlichen Anteil von beispielsweise Papierfasern enthält, wird er als Einlauf in eine weitere Stufe geführt. Üblicherweise spricht man dann von einer ersten und zweiten Flotationsstufe oder auch von Primär- und Sekundärflotation. Der Durchlauf, also der Gutstoff der zweiten Flotationsstufe kann dem Zulauf der ersten Flotationsstufe wieder zugegeben werden. Es gibt auch Fälle, in denen der Durchlauf der zweiten Stufe dem Durchlauf, also dem Gutstoff der ersten Stufe zugemischt wird. Der in der zweiten Stufe erzeugte Flotationsschaum kann dann entsorgt oder falls er doch noch zu viele Fasern enthält, einer dritten Stufe zugeführt werden. Flotationskammern oder -zellen für die zweite Flotationsstufe sind zumeist ähnlich oder gleich aufgebaut wie die für die erste Stufe, ihre Anzahl ist aber bedeutend geringer. Typische Anlagen haben fünf oder sechs Flotationszellen in der Primärstufe und eine oder zwei in der Sekundärstufe.

Die DE 101 25 978 C1 beschreibt ein Flotationsverfahren gemäß dem Oberbegriff des Anspruchs 1, bei der Teil-ströme abgezogen und an anderen Stellen der Anlage wieder zugegeben werden, insbesondere wird Flotationsschaum in die Fasersuspension von stromaufwärts geschalteten Flotationszellen zurückgeführt. Weitere Flotationsverfahren gemäß dem Oberbegriff des Anspruchs 1 sind aus den EP 1 416 086 A2, EP 1 262 593 A1, DE 10 2007 060 736 A1 und DE 103 29 883 A1 bekannt.

Der Erfindung liegt die Aufgabe zu Grunde, den Aufwand zur Durchführung des Verfahrens zu reduzieren, ohne dass Einbußen bezüglich der Trennwirkung auftreten.

Diese Aufgabe wird durch die im Anspruch 1 genannten Merkmale gelöst.

Durch das neue Verfahren wird in mindestens einer ausgewählten Flotationskammer eine Schaumschicht mit beträchtlich vergrößerter Schaummenge gebildet. Dabei kann akzeptiert werden, dass der zusätzlich eingeführte Flotationsschaum auf Grund der Verfahrensführung noch restliche Fasern enthält. Diese können zusammen mit dem absinkenden Wasser zwischen den Gasblasen in die darunter liegende Faserstoffsuspension abfließen (Schaumdränage).

Außerdem wird durch das Verfahren die Stabilität der Schaumschicht verbessert, da zu dieser weitere Flüssigkeit zugeführt wird, was wiederum eine höhere Schaumschicht zulässt. Durch eine relativ feuchte hohe Schaumschicht wird die Schaumdränage erleichtert, also der Faserverlust entscheidend reduziert.

Das neue Verfahren hat im Wesentlichen den Vorteil, dass die Anzahl der Flotationszellen geringer sein kann, insbesondere wenn die zu flotierende Faserstoffsuspension als erstes in die schaumaufnehmende Flotationskammer geführt wird. Der darin gebildete Flotationsschaum hat normalerweise den höchsten Verschmutzungsgrad, er wird mit dem - weniger verschmutzten - eingeführten Flotationsschaum ergänzt, ohne dass dieser den eigentlichen Flotationsvorgang in dieser Flotationskammer noch belastet. Der Flotationsprozess ist grundsätzlich nur ein statistischer Vorgang (Flotations-Wahrscheinlichkeit). Anders als es bei einer erneuten Flotation in einer weiteren Stufe wäre, wirkt es sich bei der Erfindung vorteilhaft aus, dass der rückgeführte Schaum in die stark gashaltige mit kugelförmigen Blasen durchsetzte Schaumschicht der ersten Flotationskammer geführt wird.

Der wieder einzuführende Flotationsschaum kann zweckmäßiger Weise entlüftet werden, damit er mit einer Schaumpumpe gefördert werden kann. Diese Entlüftung kann aber geringer sein (Teilentlüftung), als wenn der Flotationsschaum zusammen mit einer Faserstoffsuspension gepumpt werden sollte.

Die Erfindung und ihre Vorteile werden erläutert an Hand von Zeichnungen. Dabei zeigen:
- Fig. 1: ein einfaches Verfahrensschema zur Erläuterung der Erfindung;
- Fig. 2: eine übliche Flotationszelle zur Durchführung des erfindungsgemäßen Verfahrens;
- Fig. 3: eine spezielle Flotationszelle mit Schaumeinführung zur Durchführung des erfindungsgemäßen Verfahrens;
- Fig. 4: ein Verfahrensschema mit insgesamt 5 Flotationszellen;
- Fig. 5: eine Variante des in Fig. 4 gezeigten Verfahrensschemas;
- Fig. 6: eine mögliche Anwendung des Verfahrens bei einer mehrstufi-gen Flotationsanlage;
- Fig. 7: eine Variante, bei der zwei schaumaufnehmende Flotationskammern verwendet werden;
- Fig.8-13: je eine weitere mögliche Flotationszelle mit Schaumeinführung.

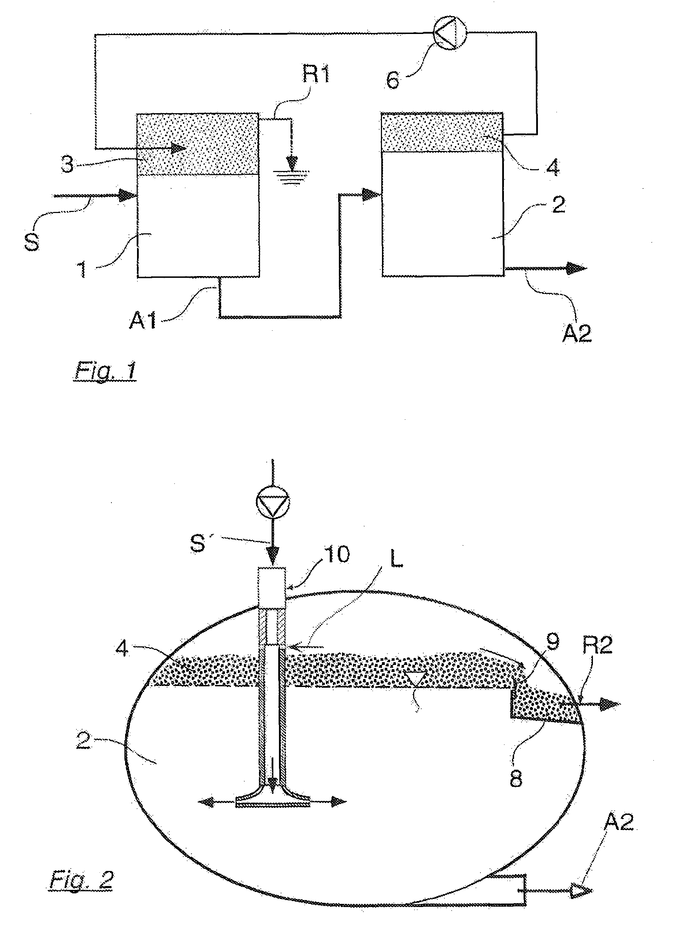

Fig. 1 zeigt ein einfaches Schema mit einer Flotationskammer 1, in die die zu flotierende Faserstoffsuspension S eingespeist wird. Dabei ist hier die Vermischung mit Gas nicht dargestellt. Der Durchlauf A1 dieser Kammer wird in eine weitere Flotationskammer 2 geführt. In beiden Flotationskammern 1 und 2 wird jeweils Flotationsschaum 3 bzw. 4 gebildet. Der Flotationsschaum 4 der zweiten Flotationskammer 2 wird als Überlauf abgezogen und in den Flotationsschaum 3 der ersten Flotationskammer 1 geführt, wozu hier eine teilentgasende Schaumpumpe 6 dient. Der Durchlauf A2 der zweiten Flotationskammer 2 ist entweder der Gutstoff der Flotationsanlage, oder er wird noch weiter flotiert. Der Überlauf der ersten Flotationskammer wird als Rejekt R1 entsorgt.

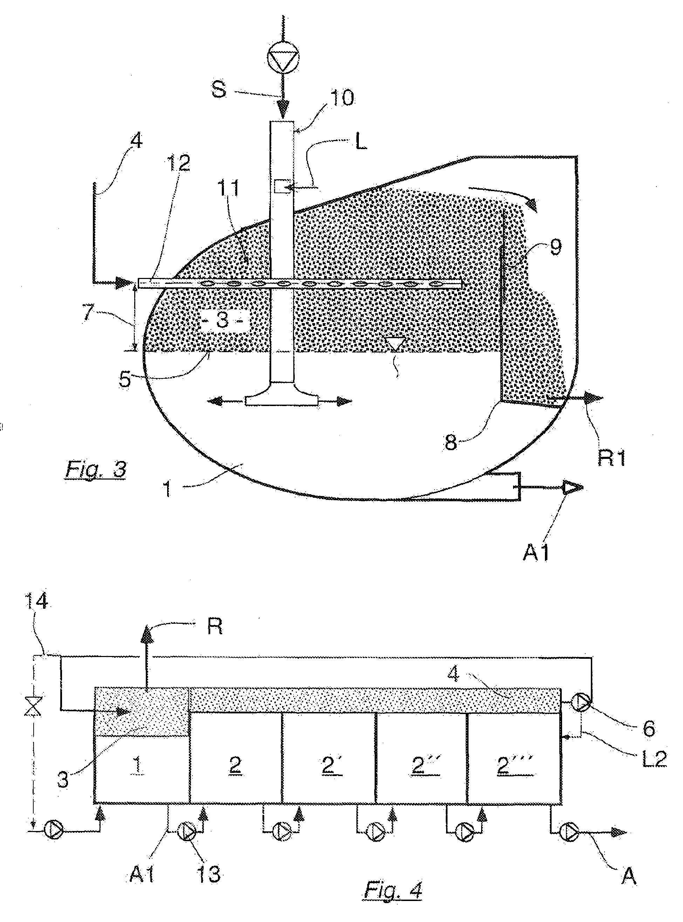

Da die Aufgabe der ersten Flotationskammer 1 (Fig. 1) etwas anders ist als die der zweiten Flotationskammer 2, kann es sinnvoll sein, die Flotationszellen für diese unterschiedlichen Zwecke auch unterschiedlich auszugestalten (s. hierzu z. B. die Figuren 2 und 3).

Üblicherweise wird man mehr als zwei Flotationskammern verwenden (s. hierzu die Fig.4, 5, 6 und 7), um das Verfahren im industriellen Maßstab anzuwenden.

In Fig. 2 ist der Schnitt durch eine die Flotationskammer 2 enthaltende Flotationszelle mit ovalem Querschnitt dargestellt, einer Form, die sich als besonders günstig erwiesen hat. Die Faserstoffsuspension S wird in die Mischvorrichtung 10 eingepumpt und mit dem Gas L, in der Regel Luft unter Bildung von Gasblasen intensiv vermischt. Mit Vorteil ist die Mischvorrichtung 10 exmittig in der Flotationskammer 2 angeordnet und taucht in die belüftete Faserstoffsuspension S' ein. Dabei wird das Gas L durch Injektionswirkung angesaugt und mit der Faserstoffsuspension S' vermischt. Das Gas L kann aus der Flotationszelle oberhalb des Flotationsschaumes 4 direkt entnommen werden. Der aufsteigende Flotationsschaum 4 nimmt die zu flotierenden Feststoffe, insbesondere Störstoffe wie Druckfarbenpartikel, Kunststoffteilchen oder Harze auf und fließt über das vorzugsweise einstellbare Schaumwehr 9 in eine Schaumrinne 8 ab. Er bildet somit den Überlauf dieser Zelle und wird als Rejekt R2 ausgeleitet. Der Durchlauf, also der Gutstoff A2 wird im unteren Teil der Flotationskammer 2 abgenommen.

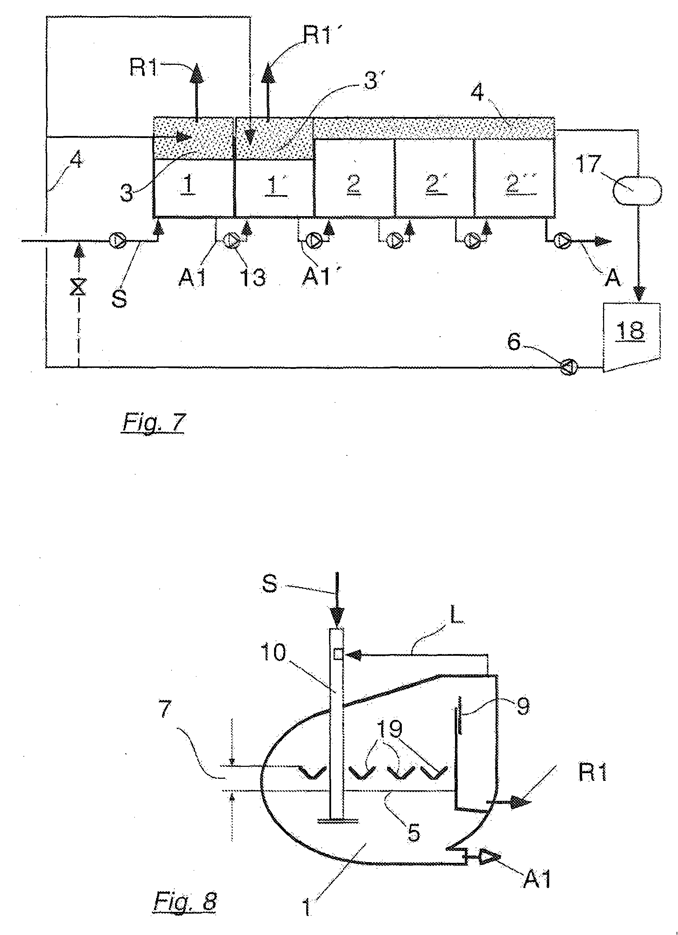

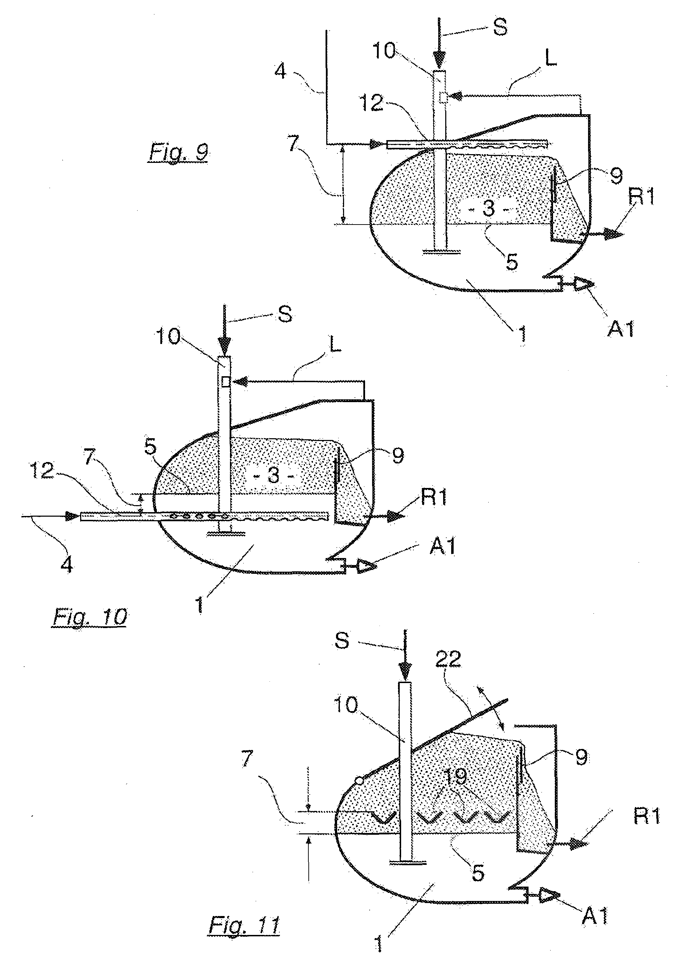

Fig. 3 zeigt eine für das erfindungsgemäße Verfahren speziell ausgestaltete Flotationszelle. Sie weist oberhalb der Grenzfläche zwischen Suspension S und Schaum, also oberhalb des Suspensionsspiegels 5 einen Schaumsammelraum 11 mit relativ großem Volumen auf. In diesen Schaumsammelraum 11 münden die Zuläufe für den einzuführenden Flotationsschaum 4, der aus einer anderen Flotationskammer stammt und sich mit dem hier aufsteigenden Flotationsschaum 3 vermischt. Für die Einführung des Flotationsschaumes 4 ist exemplarisch ein gelochtes Rohr 12 angedeutet, es sind aber auch andere Möglichkeiten, wie z. B. oben offene Rinnen 19 (s. Fig. 8) vorstellbar. Im Allgemeinen ist anzustreben, dass der Flotationsschaum 4 bei seiner Einführung flächenhaft verteilt wird, wobei diese Fläche etwa rechtwinklig oder leicht schräg zu Steigrichtung des Flotationsschaumes 3 liegen kann, sich aber nicht notwendiger Weise über die ganze Flotationskammer 1 erstrecken muss. Beispielsweise kann eine waagerechte Verteilung erfolgen, die mindestens 30% der waagerechten Querschnittsfläche der Flotationskammer 1 im Zugabebereich erfasst. Der Flotationsschaum 4 wird in einem Bereich in den Flotationsschaum 3 eingeführt, der hier vom Suspensionsspiegel 5 einen in Steigrichtung des Flotationsschaumes 3 gemessenen positiven Abstand 7 hat. Ein solcher Abstand 7 kann beispielsweise zwischen 100 mm und 1000 mm liegen. Bei dem Verfahren nach Fig. 9 erfolgt die Einführung oberhalb des aufsteigenden Flotationsschaumes 3. Bei dem Verfahren nach Fig. 10 wird die Einführung des Flotationsschaumes 4 unterhalb des Suspensionsspiegels 5 also mit negativem Abstand 7 vorgenommen. Die Verhahren nach Fig. 9 und 10 sind keine Ausführungsbeispiele der beanspruchten Erfindung. Mit Vorteil wird der Schaumsammelraum 11 teilweise von Schaumführungsflächen begrenzt, die den aufsteigenden Flotationsschaum leicht anstauen und seitlich zur Schaumrinne 8 führen. Dadurch wird die Schaumdränage weiter verbessert. Die Schaumführungsflächen können durch eine schwenk- oder verschiebbare Wand 22 einstellbar sein, um die Schaumflüsse zu beeinflussen bzw. zu regeln (s. Fig.11). Durch Verstellen des Schaumwehres 9 lassen sich die Schaumhöhe und damit insbesondere die Schaumentwässerung beeinflussen.

Es kann von Vorteil sein, den in der Flotationskammer 1 gebildeten Flotationsschaum 3 nicht vollständig mit dem eingeführten Flotationsschaum 4 zu vermischen.

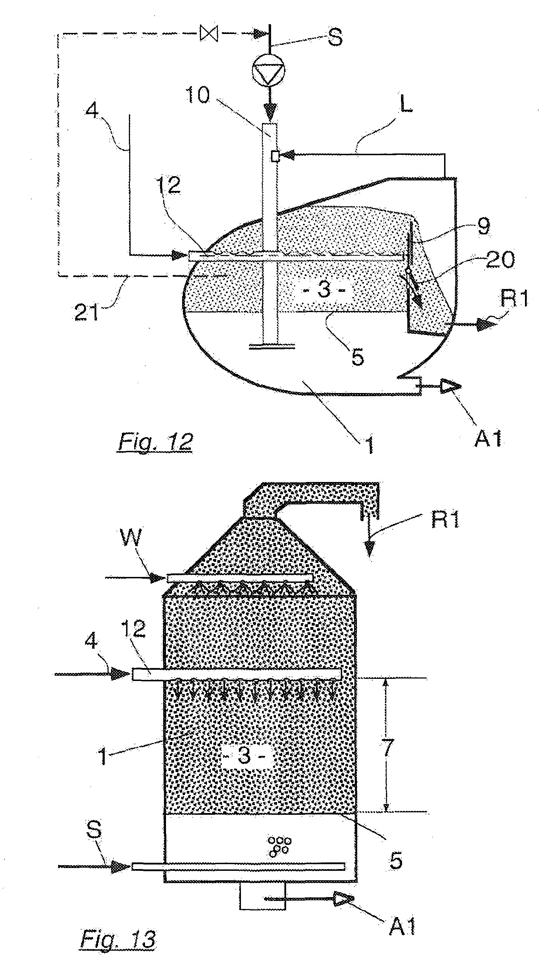

Der nicht vermischte Anteil kann dann z. B. durch ein einstellbare Schaumklappe 20 (s. Fig. 12) in den Rejekt 1 gelangen oder direkt dem einzuführenden Flotationsschaum 4 zugeführt werden (Pfeil 21 in Fig. 12).

Es gibt bereits apparative Lösungen, die dazu dienen, die zu flotierende Suspension in den bereits entstandenen Flotationsschaum einzuführen, wie sie z. B. aus der EP 1 029 975 A1 und der DE 198 23 053 C1 bekannt sind. Solche oder ähnliche Apparate können auch für das neue Verfahren geeignet sein.

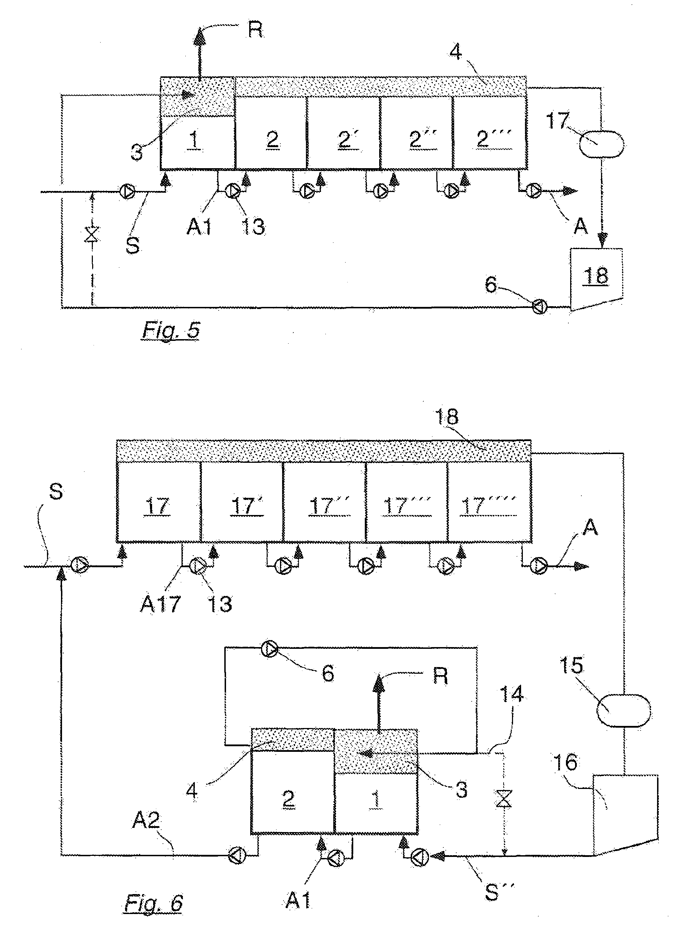

Eine erfindungsgemäße Flotationsanlage kann, wie Fig. 4 zeigt, eine erste Flotationszelle mit der Flotationskammer 1 umfassen sowie vier weitere Flotationszellen mit jeweils einer Flotationskammer 2, 2',2" oder 2"'. Die zu flotierende Faserstoffsuspension S wird in die erste Flotationskammer 1 eingepumpt und mit einer hier nicht gezeigten Mischvorrichtung begast, so dass sich der Flotationsschaum 3 bildet. Der Durchlauf A1 dieser Zelle wird mit einer Stoffpumpe 13 (Kreiselpumpe) in die nächste Flotationskammer 2 gefördert, in der wiederum zunächst die Begasung und dann die Flotation stattfinden. Diese Vorgänge wiederholen sich bei den Flotationskammern 2', 2" und 2'''. Der letzte Durchlauf ist der Gutstoff A der Anlage. Die Überlaufe der Flotationskammern 2, 2', 2" und 2''' werden in einer gemeinsamen Schaumrinne gesammelt und als Flotationsschaum 4 in den Flotationsschaum 3 der ersten Flotationskammer 1 eingeführt. Dabei kann auch z.B. zu Regelzwecken ein Teil des Flotationsschaums 4 abgezweigt und insbesondere dem Zulauf zur ersten Flotationskammer 1 zugemischt werden, was hier durch eine gestrichelte Linie 14 mit Regelventil angedeutet ist. Der in der ersten Flotationskammer 1 anfallende Überlauf wird als Rejekt R entsorgt. Die Schaumpumpe 6 kann als Entgasungspumpe ausgeführt sein, hier mit Gasrückführung L2 in die Flotationskammer 2"'. Gemäß Fig. 5 kann an Stelle einer Entgasungspumpe ein an sich bekannter Schaumzerstörer 15, der zum Aufreißen der Gasblasen dient, sowie ein sich anschließender Schaumtank 16 verwendet werden.

Auch wenn mit mehreren Stufen flotiert werden soll, kann die Erfindung vorteilhaft verwendet werden. So zeigt die Fig. 6 eine Flotationsanlage mit standardmäßig betriebenen fünf in Reihe geschalteten Flotationskammern 17, 17', 17", 17''' und 17'''', die als erste Stufe dienen, und wobei die zu flotierende Faserstoffsuspension S der ersten Flotationskammer 17 zugepumpt wird. Der Flotationsschaum 18 der ersten Stufe wird als Faserstoffsuspension S'' in den Zulauf einer der zweiten Stufe zuzurechnenden Flotationskammer 1 geführt, hier nach einem Schaumzerstörer 15 und einem Schaumtank 16. Die zweite Stufe enthält eine zweite Flotationskammer 2, die mit dem Durchlauf A1 der ersten Flotationskammer 1 beschickt, und in der der Flotationsschaum 4 gebildet wird. Über die Schaumpumpe 6 wird der Flotationsschaum 4 in der Flotationsschaum 3 eingeführt. Der Durchlauf A2 der Flotationskammer 2 gelangt hier in den Zulauf zu ersten Stufe, und der Überlauf der Flotationskammer 1 kann als Rejekt R entsorgt werden.

Eine weitere Ausgestaltung des Verfahrens wird in Fig. 7 dargestellt. In diesem Fall werden zwei, insbesondere die ersten beiden Flotationskammern 1 und 1' so betrieben, dass der jeweils darin sich bildende Flotationsschaum 3 bzw. 3' mit wieder eingeführtem Flotationsschaum versorgt wird, wobei hier das Beispiel der direkten Zugabe dargestellt ist. Eine andere Möglichkeit ist der Figur 8 entnehmbar. Die Überläufe R1 und R1' können entsorgt werden. Die beiden Flotationskammern 1 und 1' sind in Reihe geschaltet, d. h. der Durchlauf A1 der ersten Flotationskammer 1 wird in die nächste Flotationskammer 1' gepumpt und über eine Mischvorrichtung erneut begast. Stromabwärts folgen dann die Flotationskammern 2, 2' und 2", in die kein Flotationsschaum geführt wird.

Fig. 13 zeigt einen Apparat zu Säulenflotation, bei dem also der Flotationsschaum mit leichtem Überdruck aus dem Gehäuse entfernt wird. Dieser Apparat weist eine Flotationskammer 1 auf. Auch hiermit lässt sich die Erfindung realisieren, wenn in den entstehenden Flotationsschaum 3 z. B. über mindestens ein gelochtes Rohr 12 (oder auch offene Rinnen, s. Fig. 8) der in einer anderen Flotationskammer erzeugte Flotationsschaum 4 eingeführt wird. Optional kann von oben Wasser W zur Stabilisierung des Flotationsschaumes zugegeben werden.

## Patentansprüche

1. Verfahren zur Entfernung von Feststoffen durch Flotation aus einer Faserstoffsuspension (S, S''), bei dem die Faserstoffsuspension (S, S'') mit Gas (L) vermischt wird, und bei dem in mindestens zwei Flotationskammern (1, 2) Flotationsschaum (3, 4) gebildet wird, der Feststoffe sammelt und aus der Flotationskammer (3, 4) abführt, und bei dem ferner die von diesen Feststoffen befreite Faserstoffsuspen-sion als Durchlauf (A1, A2) aus der jeweiligen Flotationskammer (1, 2) abgeführt wird, und bei dem der Flotationsschaum (4) mindestens einer Flotationskammer (2) zumindest teilweise in mindestens eine andere Flotationskammer (1) eingeführt wird,
**dadurch gekennzeichnet,**
**dass** der einzuführende Flotationsschaum (4) in die andere Flotationskammet (1) in einem Bereich eingeführt wird, der zwischen dem Suspensionsspiegel (5) und der Obergrenze der zusammengeführten Flotationsschäume (3, 4) liegt.

2. Verfahren nach Anspruch 1,
**dadurch gekennzeichnet,**
**dass** der einzuführende Flotationsschaum (4) in den Flotations-schaum (3) der anderen Flotationskammer (1) in einem Bereich eingeführt wird, der vom Suspensionsspiegel (5) einen in Steigrichtung des Flotationsschaumes (3) gemessenen Abstand (7) zwischen 0 mm und 200 mm, vorzugsweise mindestens 100 mm hat.

3. Verfahren nach Anspruch 1 oder 2,
**dadurch gekennzeichnet,**
**dass** der einzuführende Flotationsschaum (4) teilweise entlüftet und dann in den Flotationsschaum (3) der anderen Flotationskammer (1) eingeführt wird.

4. Verfahren nach einem der voran stehenden Ansprüche,
**dadurch gekennzeichnet,**
**dass** der einzuführende Flotationsschaum (4) ohne Zwischenschaltung eines Sammelbehälters in den Flotationsschaum (3) der anderen Flotationskammer (1) eingeführt wird.

5. Verfahren nach einem der voran stehenden Ansprüche,
**dadurch gekennzeichnet,**
**dass** die Höhe der zusammengeführten Flotationsschäume (3, 4) in der den Flotationsschaum (3) der anderen Flotationskammer (1) aufnehmenden Flotationskammer (1,1') zur Beeinflussung der Schaumentwässerung eingestellt wird.

6. Verfahren nach einem der voran stehenden Ansprüche,
**dadurch gekennzeichnet,**
**dass** die Anzahl der Flotationskammern (2, 2', 2'', 2''', 17, 17', 17'', 17''', 17''''), denen kein Flotationsschaum (4) zugeführt wird, mindestens drei- , vorzugsweise mindestens viermal so groß ist wie die der Flotationsschaum (4) aufnehmenden Flotationskammer (1) bzw. Flotationskammern (1, 1').

7. Verfahren nach einem der voran stehenden Ansprüche,
**dadurch gekennzeichnet,**
**dass** in der den Flotationsschaum (4) aufnehmende Flotationskammer (1) der Flotationsschaum (3, 4) durch mindestens eine Schaum-führungsfläche geführt wird.

8. Verfahren nach Anspruch 11,
**dadurch gekennzeichnet,**
**dass** die Position der Schaumführungsflächen einstellbar ist.

9. Verfahren nach einem der voran stehenden Ansprüche,
**dadurch gekennzeichnet,**
**dass** nur ein Teil des in den Flotationskammern (2, 2', 2", 2''', 17, 17', 17'', 17''', 17""), denen kein Flotationsschaum (4) zugeführt wird, angefallenen Flotationsschaumes (4) in eine den Flotationsschaum (4) aufnehmende Flotationskammer (1) eingeführt wird.

10. Verfahren nach einem der voran stehenden Ansprüche,
**dadurch gekennzeichnet,**
**dass** nur ein Teil des in der den Flotationsschaum (4) aufnehmenden Flotationskammer (1) gebildeten Flotationsschaumes (3) mit dem in einer anderen Flotatiönskammer (2, 2', 2'', 2''') gebildeten Flotationsschaum (4) vermischt wird.

11. Verfahren nach einem der voran stehenden Ansprüche,
**dadurch gekennzeichnet,**
**dass** der einzuführende Flotationsschaum (4) in die den Flotationsschaum (4) aufnehmende Flotationskammer (1,1') so eingeführt wird, dass eine waagerechte Verteilung erfolgt, die mindestens 30%, vorzugsweise mindestens 50% der waagerechten Querschnittsfläche der Flotationskammer (1,1') im Zugabebereich erfasst.

## Claims

1. Method for removing solid particles from a fibrous suspension (S, S'') by flotation, in which the fibrous suspension (S, S'') is mixed with gas (L), and in which, in at least two flotation chambers (1, 2), flotation foam (3, 4) is formed, which collects solid particles and leads them out of the flotation chamber (3, 4), and in which, moreover, the fibrous suspension freed of these solid particles is led out of the respective flotation chamber (1, 2) as accepts (A1, A2), and in which the flotation foam (4) from at least one flotation chamber (2) is at least partly introduced into at least one other flotation chamber (1),
**characterized in that**
the flotation foam (4) to be introduced into the other flotation chamber (1) is introduced in a region which is located between the suspension level (5) and the upper limit of the combined flotation foams (3, 4).

2. Method according to Claim 1,
**characterized in that**
the flotation foam (4) to be introduced is introduced into the flotation foam (3) of the other flotation chamber (1) in a region which is at a distance (7) from the suspension level (5), measured in the rising direction of the flotation foam (3), between 0 mm and 200 mm, preferably at least 100 mm.

3. Method according to Claim 1 or 2,
**characterized in that**
the flotation foam (4) to be introduced is partially de-aerated and then introduced into the flotation foam (3) of the other flotation chamber (1).

4. Method according to one of the preceding claims,
**characterized in that**
the flotation foam (4) to be introduced is introduced into the flotation foam (3) of the other flotation chamber (1) without the interposition of a collecting container.

5. Method according to one of the preceding claims,
**characterized in that**
the height of the combined flotation foams (3, 4) in the flotation chamber (1, 1') receiving the flotation foam (3) from the other flotation chamber (1) is adjusted in order to influence the foam dewatering.

6. Method according to one of the preceding claims,
**characterized in that**
the number of flotation chambers (2, 2', 2'', 2''', 17, 17', 17'', 17''', 17'''') to which no flotation foam (4) is supplied is at least three times, preferably at least four times, as great as that of the flotation chamber (1) or flotation chambers (1, 1') receiving the flotation foam (4).

7. Method according to one of the preceding claims,
**characterized in that**
in the flotation chamber (1) that receives the flotation foam (4), the flotation foam (3, 4) is guided by at least one foam guide surface.

8. Method according to Claim 7,
**characterized in that**
the position of the foam guide surfaces is adjustable.

9. Method according to one of the preceding claims,
**characterized in that**
only some of the flotation foam (4) that has accumulated in the flotation chambers (2, 2', 2", 2''', 17, 17', 17'', 17''', 17'''') to which no flotation foam (4) is supplied is introduced into a flotation chamber (1) receiving the flotation foam (4).

10. Method according to one of the preceding claims,
**characterized in that**
only some of the flotation foam (3) formed in the flotation chamber (1) receiving the flotation foam (4) is mixed with the flotation foam (4) formed in another flotation chamber (2, 2', 2", 2''').

11. Method according to one of the preceding claims,
**characterized in that**
the flotation foam (4) to be introduced into the flotation chamber (1, 1') that receives the flotation foam (4) is introduced in such a way that a horizontal distribution takes place which covers at least 30%, preferably at least 50%, of the horizontal cross-sectional area of the flotation chamber (1, 1') in the input region.

## Revendications

1. Procédé pour éliminer des particules solides d'une suspension fibreuse (S, S") par flottaison, dans lequel la suspension fibreuse (S, S'') est mélangée à du gaz (L) et dans lequel, dans au moins deux chambres de flottaison (1, 2), est formée de la mousse de flottaison (3, 4), qui recueille les particules solides et les évacue de la chambre de flottaison (3, 4), et dans lequel en outre la suspension fibreuse débarrassée de ces particules solides est évacuée de la chambre de flottaison respective (1, 2) sous forme de flux (A1, A2), et dans lequel la mousse de flottaison (4) d'au moins une chambre de flottaison (2) est introduite au moins en partie dans au moins une autre chambre de flottaison (1),
**caractérisé en ce que**
la mousse de flottaison (4) à introduire est introduite dans l'autre chambre de flottaison (1) dans une région située entre le niveau de la suspension (5) et la limite supérieure des mousses de flottaison (3, 4) réunies.

2. Procédé selon la revendication 1,
**caractérisé en ce que**
la mousse de flottaison (4) à introduire est introduite dans la mousse de flottaison (3) de l'autre chambre de flottaison (1) dans une région située à une distance (7) comprise entre 0 mm et 200 mm, de préférence à au moins 100 mm du niveau de la suspension (5), mesurée dans la direction ascendante de la mousse de flottaison (3).

3. Procédé selon la revendication 1 ou 2,
**caractérisé en ce que**
la mousse de flottaison (4) à introduire est partiellement désaérée et est ensuite introduite dans la mousse de flottaison (3) de l'autre chambre de flottaison (1).

4. Procédé selon l'une quelconque des revendications précédentes,
**caractérisé en ce que**
la mousse de flottaison (4) à introduire est introduite dans la mousse de flottaison (3) de l'autre chambre de flottaison (1) sans interposition d'un récipient collecteur.

5. Procédé selon l'une quelconque des revendications précédentes,
**caractérisé en ce que**
la hauteur des mousses de flottaison (3, 4) réunies dans la chambre de flottaison (1, 1') recevant la mousse de flottaison (3) de l'autre chambre de flottaison (1) est ajustée en vue d'influencer la déshydratation de la mousse.

6. Procédé selon l'une quelconque des revendications précédentes,
**caractérisé en ce que**
le nombre des chambres de flottaison (2, 2', 2'', 2''', 17, 17', 17'', 17''', 17'''') auxquelles aucune mousse de flottaison (4) n'est acheminée est au moins trois fois, de préférence au moins quatre fois plus grand que le nombre de la chambre de flottaison (1) ou des chambres de flottaison (1, 1') recevant la mousse de flottaison (4).

7. Procédé selon l'une quelconque des revendications précédentes,
**caractérisé en ce que**
la mousse de flottaison (3, 4) est guidée à travers au moins une surface de guidage de mousse dans la chambre de flottaison (1) recevant la mousse de flottaison (4).

8. Procédé selon la revendication 7,
**caractérisé en ce que**
la position des surfaces de guidage de mousse est ajustable.

9. Procédé selon l'une quelconque des revendications précédentes,
**caractérisé en ce que**
seulement une partie de la mousse de flottaison (4) produite dans les chambres de flottaison (2, 2', 2'', 2''', 17, 17', 17'', 17''', 17''''), auxquelles aucune mousse de flottaison (4) n'est acheminée, est introduite dans une chambre de flottaison (1) recevant la mousse de flottaison (4).

10. Procédé selon l'une quelconque des revendications précédentes,
**caractérisé en ce que**
seulement une partie de la mousse de flottaison (3) formée dans la chambre de flottaison (1) recevant la mousse de flottaison (4) est mélangée avec la mousse de flottaison (4) formée dans une autre chambre de flottaison (2, 2', 2'', 2''').

11. Procédé selon l'une quelconque des revendications précédentes,
**caractérisé en ce que**
la mousse de flottaison (4) à introduire est introduite dans la chambre de flottaison (1, 1') recevant la mousse de flottaison (4) de telle sorte qu'il se produise une répartition horizontale qui constitue au moins 30 %, de préférence au moins 50 % de la surface horizontale en section transversale de la chambre de flottaison (1, 1') dans la région de l'ajout.
